# EUROPÄISCHE PATENTSCHRIFT

(11) **EP 0 854 304 B1**
(45) Veröffentlichungstag und Bekanntmachung des Hinweises auf die Patenterteilung: **25.04.2001**
(21) Anmeldenummer: 97122156.9
(22) Anmeldetag: 16.12.1997
(51) Int. Cl.: F16D 13/04

(54) **Reibungskupplung für Fahrzeuge**
Friction clutch for vehicles
Embrayage à friction pour véhicules

(30) Priorität: 17.01.1997 DE 29700807 U
(43) Veröffentlichungstag der Anmeldung: 22.07.1998
(73) Patentinhaber: Firma Jörg Schlechte Präzisionsteile für den Zweiradsport, 81543 München (DE); Nuova S.T.M. di Vito e Oronzo Strada, 10023 Chieri/TO (IT)
(72) Erfinder: Strada, Vito Pietro, I-10023 Chieri/To (IT)
(74) Vertreter: Beetz & Partner Patentanwälte

(56) Entgegenhaltungen:
- EP-A- 0 676 568
- US-A- 1 974 390
- US-A- 2 146 044
- US-A- 5 496 154
- PATENT ABSTRACTS OF JAPAN vol. 10, no. 273 (M-518) [2329] , 17.September 1986 & JP 61 096222 A (KAWASAKI HEAVY INDUSTRIE LTD.), 14.Mai 1986,
- PATENT ABSTRACTS OF JAPAN vol. 10, no. 349 (M-538), 26.November 1986 & JP 61 149618 A (KAWASAKI HEAVY INDUSTRIE LTD.), 8.Juli 1986,
- Ersatzteilkatalog 96 der Firma Ducati, Kupplung für Ducati 916 Racing

## Beschreibung

Die Erfindung betrifft eine Kupplungseinheit für Fahrzeuge und insbesondere eine Reibungskupplung für Motorräder, die das sogenannte Hinterradstempeln vermeidet und eine optimale Wiederholgenauigkeit beim Einkuppelmanöver realisiert.

Die Leistung von Antriebsaggregaten kann bei Fahrzeugen nicht direkt auf die Antriebsräder übertragen werden. Bei Verbrennungsmotoren liegt das daran, daß ein verwertbares Drehmoment erst ab einer bestimmten Drehzahl abgegeben wird und darüber hinaus das Drehmoment des Motors zum Anfahren und für das Befahren von Steigungen nicht ausreicht. Drehmoment und Drehzahl des Motors müssen daher mittels einer geeigneten Übersetzung an die Fahrwiderstände und den gewünschten Geschwindigkeitsbereich des Fahrzeugs angepaßt werden. Diese Aufgaben übernehmen beispielsweise beim Motorrad das Schaltgetriebe und der Radantrieb. Zusätzlich ist eine Kupplung erforderlich, die eine Drehzahlangleichung zwischen Motor und Getriebe bewirkt. Die Kupplung wirkt somit als ein Drehzahlwandler.

Im Fahrbetrieb eines Motorrads kann es oftmals dazu kommen, daß beim Herunterschalten des Getriebes ein Stempeln des Hinterrads auftritt. Darunter wird ein Blockieren des Hinterrads beim Einkuppeln in eine niedrigere Übersetzungsstufe verstanden.

Es sind sogenannte Anti-Hopping-Kupplungen bekannt (Ersatzteilkatalog 96 der Firma Ducati, Kupplung für Ducati 916 Racing), die ein Stempeln des Hinterrads beim Herunterschalten dadurch vermeiden, daß Auflaufflächen vorgesehen sind, die lastabhängig den Anpreßdruck der Kupplungslamellen vermindern können. Beispielsweise beim Gaswegnehmen kann dadurch das treibende Hinterrad den Anpreßdruck vermindern. Insbesondere ist dies beim Herunterschalten spürbar. Der Motor stemmt sich in diesem Fall beim Einkuppeln etwas weicher und mit einer gewissen Zeitverzögerung wieder auf Drehzahl. Gemäß der oben beschriebenen Anti-Hopping-Kupplung sind drei Auflaufflächen vorgesehen, welche mit Gegenflächen in Kontakt stehen. Sobald nun ein Bremsmoment auftritt, etwa beim Herunterschalten, kann sich das Kupplungsrad an den Kontaktflächen gegenüber dem Kupplungskern verschieben, wodurch dann der Anpreßdruck vermindert wird.

Der Nachteil von Auflaufflächen besteht darin, daß vor einer Verschiebung des Kupplungsrads gegenüber dem Kupplungskern zunächst eine Haftreibung der Kontaktflächen überwunden werden muß, wobei anschließend der Gleitreibungswert für den Betrag, um den sich das Kupplungsrad abhebt, verantwortlich ist. Da bekanntlich die Reibungszahl der Haftreibung kleiner ist als die Reibungszahl der Gleitreibung, ist ein sogenanntes Losbrechmoment erforderlich, um eine Bewegung des Kupplungsrads zu ermöglichen. Dies stellt einen gewissen Unsicherheitsfaktor dar, da sich gezeigt hat, daß dieses Losbrechmoment nur schwer konstruktiv eingestellt werden kann und von vielen Faktoren abhängt. Insbesondere wären solche Faktoren beispielsweise das Laufbild, der Verschleißzustand, die Oberflächengenauigkeit, usw., der Kontaktflächen. Weiterhin weisen die Kontaktflächen eine relativ große summierte Auflagefläche auf, wenn beispielsweise drei derartige Flächen vorgesehen sind. Dies erhöht ebenso das erforderliche Losbrechmoment.

Es ist fertigungstechnisch nur sehr schwer möglich, die oben erwähnten Faktoren derart zu kontrollieren, daß bei jeder Kupplung dasseble Losbrechmoment vorhanden ist. Dies führt zum einen zu einer Unsicherheit für Fahrer von Rennmotorrädern, die bei jedem Lauf eine andere Kupplung verwenden. Darüber hinaus kann es auch im Nicht-Rennsport-Einsatz dazu führen, daß sich das Losbrechmoment durch äußere Faktoren, durch Verschleiß oder ähnliches während des Betriebs des Motorrads ändert, so daß dies zu Fahrunsicherheiten führen kann. Weiterhin kann sich ebenso das Losbrechmoment von Kupplung zu Kupplung ändern, und somit einen Großserieneinsatz erschwerden.

In der JP 61 096222 A ist eine weitere Kupplungseinheit gezeigt, die ein Kupplungsrad und einen Kupplungskern aufweist. Das Kupplungsrad ist relativ zum Kupplungskern bewegbar und kann eine Reibkraftverminderung bewirken. Weiterhin ist gezeigt, daß die Anzahl der Auflauframpen identisch zur Anzahl der Gegenrampen ist. Weiterhin ist gezeigt, daß anstatt einer Rampe auch eine nicht bewegbare Kugel in einer Fläche verankert sein kann, so daß dann diese Kugeloberfläche mit einer entsprechenden Gegenrampe in Kontakt kommt.

Die EP-A-0 676 568 zeigt eine weitere Kupplungseinheit, die zwischen einem ersten und einem zweiten Nockenkeil eine sogenannte Nockenwalze aufweist.

Die Aufgabe der Erfindung ist es, eine Kupplungseinheit für Fahrzeuge, insbesondere für Motorräder zu schaffen, die eine höhere Sicherheit beim Übergang auf eine niedrigere Übersetzungsstufe erzielt, ein Hinterradstempeln vermeidet und eine optimale Wiederholgenauigkeit beim Einkuppelmanöver realisiert.

Diese Aufgabe wird gemäß den unabhängigen Ansprüchen gelöst. Die abhängigen Ansprüche geben vorteilhafte Ausführungsformen und Weiterentwicklungen der Erfindung an.

Erfindungsgemäß ist eine Kupplungseinheit für Fahrzeuge, insbesondere für Motorräder vorgesehen, die ein Kupplungsrad und einen Kupplungskern aufweisen kann, wobei das Kupplungsrad relativ zum Kupplungskern radial und axial bewegbar ist und dadurch eine Verminderung der Reibkraft der Kupplung bewirkt. Ferner weist die erfindungsgemäße Reibungskupplung Auflauframpen am Kupplungskern und Gegenrampen am Kupplungsrad auf, wobei der Kontakt zwischen der Auflauframpe und der Gegenrampe über eine Kugel erfolgt.

Durch den Einsatz einer Kugel zwischen der Auflauframpe und der Gegenrampe kann die Kontaktfläche zwischen dem Kupplungskern und dem Kupplungsrad minimiert werden. Dies führt dazu, daß praktisch kein Losbrechmoment mehr vorliegt. Dies führt wiederum dazu, daß eine sehr hohe Wiederholgenauigkeit beim Einkuppelvorgang realisiert werden kann. Weiterhin ist der auftretende Verschleiß zwischen dem Kupplungsrad und dem Kupplungskern minimiert, da die in Kontakt stehenden Flächen minimiert sind. Darüber hinaus kann durch den erfindungsgemäßen Einsatz von Kugeln konstruktiv sehr genau bestimmt werden, wann sich das Kupplungsrad vom Kupplungskern abhebt. Dies liegt unter anderem daran, daß der Unterschied zwischen Haft- und Gleitreibung sich nicht mehr negativ auf den Schlupfbetrieb der Kupplung auswirken kann.

Gemäß der Erfindung sind in dem Auflauf und den Gegenrampen Nuten ausgebildet, in denen die jeweilige Kugel laufen kann. Damit kann es möglich sein, daß lediglich eine Rollreibung zwischen dem Kupplungsrad und dem Kupplungskern auftritt, wobei bekanntermaßen die Reibungszahl für die Rollreibung wesentlich kleiner als die der Haftreibung ist.

Zusätzlich kann durch einen vorgegebenen Auflaufwinkel der Auflauframpen bzw. der Gegenrampen sehr genau konstruktiv bestimmt werden, ab welchem Bremsmoment eine Anhebung des Kupplungsrads erfolgt. Somit können auf einfache Weise konstruktiv Kupplungen realisiert werden, die für unterschiedliche Anforderungen unterschiedliche Anfangsbremsmomente für eine Anhebung des Kupplungskerns aufweisen. Wie oben schon erwähnt, kann durch den Einsatz von Kugeln eine außerordentlich hohe Wiederholgenauigkeit in der Kupplung erzielt werden. Es ist weiterhin möglich, auch Auflauframpen bzw. Gegenrampen zu verbauen, welche bei einem Beschleunigungsmoment das Kupplungsrad vom Kupplungskern abheben. Dies kann beispielsweise dadurch erzielt werden, daß der Auflaufwinkel dieser Rampen um 90° zu den voranstehend genannten Rampen gedreht ist. Dadurch kann etwa ein weicheres Einkuppeln beim Hochschalten des Getriebes erzielt werden. Durch diese zusätzliche Maßnahme kann der Einkuppelvorgang sowohl beim Herauf- als auch beim Herunterschalten abgedämpft werden. Sogar bei einem Schnappen der Kupplung wäre somit ein ruckartiges Schließen der Kupplung vermeidbar.

Natürlich könnte durch eine geeignete Ausbildung der Laufnuten für die Kugeln auch erreicht werden, daß sich etwa bei einem vorliegenden Beschleunigungsmoment die Reibkraft der Kupplung dadurch weiter erhöht, daß das Beschleunigungsmoment dafür benutzt wird, daß die Kupplungsstahlscheiben fester an die Kupplungsmitnehmerscheiben gedrückt werden. Dies könnte etwa dadurch erreicht werden, daß ein Nutabschluß der Auflauframpennut verlängert werden würde oder ganz wegfällt. Dasselbe kann natürlich auch für einen Nutabschluß der Gegenrampennut gelten.

Weiterhin kann erfindungsgemäß die Nut einen halbkreisförmigen Querschnitt aufweisen, so daß die Kugel in derselben geführt ist. Dasselbe kann für die Gegenrampe gelten.

Erfindungsgemäß können darüber hinaus die Auflauframpennut und die Gegenrampennut einen der Kugelform angepaßten Auflauframpennutabschluß und Gegenrampennutabschluß aufweisen.

Erfindungsgemäß weist zumindest eine Gegenrampe weiterhin eine Anschlagfläche auf, die bei dem Vorliegen eines Beschleunigungsmoments mit einer Gegenfläche des Kupplungskerns in Kontakt kommt und dadurch die Antriebskräfte überträgt.

Weiterhin kann die axiale und radiale Bewegung des Kupplungsrads weg von dem Kupplungskern bei einem Bremsmoment durch Bolzen beschränkt sein, die mit der Innenfläche von Langlöchern des Kupplungsrades in Kontakt kommen.

Dies kann natürlich auch bei dem Vorliegen eines Beschleunigungsmoments der Fall sein, sofern dies vorgesehen ist (siehe oben).

Weiterhin sei angemerkt, daß anstatt der Nuten in der Auflauframpe und in der Gegenrampe natürlich auch andere mechanische Vorkehrungen getroffen werden können, um eine Kugel derart zu führen, daß ein Drehmoment in eine Axialbewegung des Kupplungsrads weg von dem Kupplungskern umgesetzt wird. Insbesondere könnte die Kugel beispielsweise auch seitlich an einer Rampe in einer entsprechenden Führung laufen. Weiterhin können natürlich mehrere Kugeln für ein Auflauf-/Gegenrampenpaar vorgesehen sein, sofern zweckmäßig. Darüber hinaus können beispielsweise sechs Auflauf-/ Gegenrampenpaare vorgesehen sein. Das Material des Kupplungsrads und/oder des Kupplungskerns kann eine Aluminiumlegierung sein, insbesondere können diese Bauteile aus Ergal gefertigt werden. Die Aluminiumlegierung bzw. der Werkstoff Ergal kann zudem galvanisch behandelt sein. Die zum Einsatz kommende Kugel bzw. die eingesetzten Kugeln können aus Stahl bestehen. Natürlich sind auch andere zweckmäßige Werkstoffe einsetzbar.

Durch die oben beschriebene, vorteilhafte Reibungskupplung bzw. durch die zweiteilige Kupplungseinheit kann eine drehmomentgesteuerte optimale Anti-Hopping-Kupplung realisiert werden, welche eine sehr hohe Wiederholgenauigkeit beim Einkuppelmanöver aufweist und insbesondere eine starke Verbesserung der Fahrsicherheit realisiert, insbesondere beim Schalten in Kurven. Neben diesen Effekten wird die Standzeit der Kupplung erhöht, da niedrigere Reibungskräfte auftreten. Natürlich kann zudem der Fahrkomfort stark verbessert werden, da sowohl beim Herunter- als auch beim Hochschalten des Getriebes über die Kupplung ein abgedämpfter Übergang erzielt werden kann, der insbesondere in den Bremszonen lästiges Stempeln des Hinterrads verhindern kann.

An dieser Stelle sei zusätzlich angemerkt, daß die Verminderung der Reibkraft der Kupplung durch obige Maßnahmen von 0 bis 100 % reichen kann. Zweckmäßig erscheint jedoch, daß die Reibkraft der Kupplung nicht auf Null reduziert wird (wodurch die Kupplung freilaufen würden), da sonst der reale Einkuppelvorgang verzögert werden würde.

Im folgenden werden beispielhaft vorteilhafte Ausführungsformen der Erfindung anhand von schematischen Zeichnungen näher dargestellt. Es zeigen:
- Fig. 1: eine Schnittdarstellung der erfindungsgemäßen Kupplungseinheit;
- Fig. 2: eine Draufsicht auf den Kupplungskern,
- Fig. 3: eine Draufsicht auf das Kupplungsrad gemäß einer Ausführungsform und
- Fig. 4: eine Draufsicht auf das Kupplungsrad gemäß einer weiteren Ausführungsform.

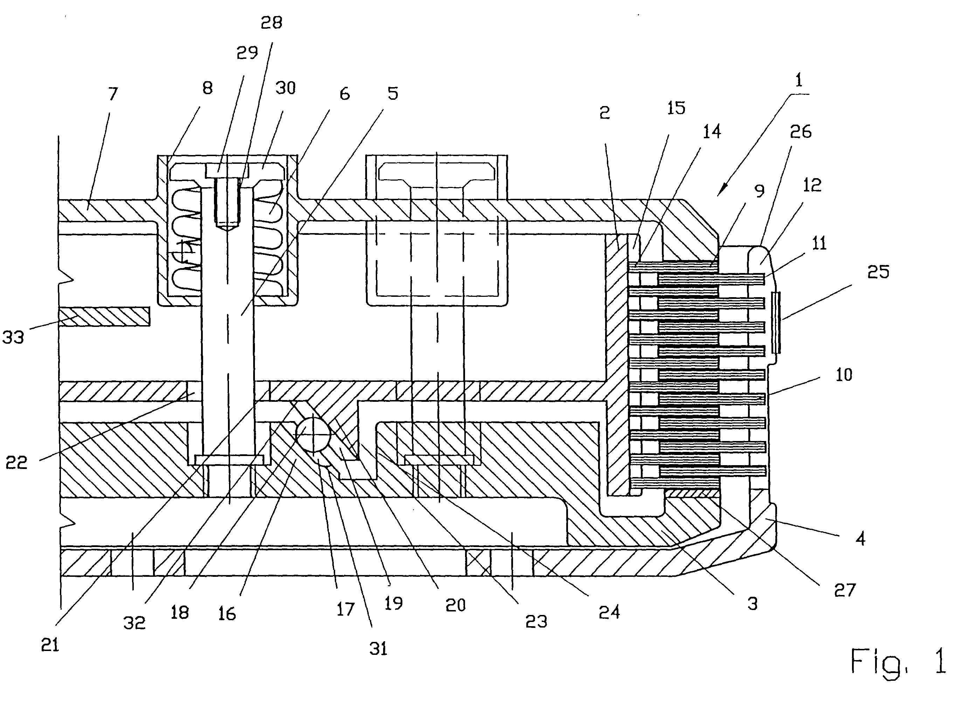

In der Fig. 1 ist eine teilweise Schnittansicht einer rotationssymmetrischen Kupplungseinheit 1 dargestellt. Die Kupplungseinheit weist ein Kupplungsrad 2 und einen Kupplungskern 3 auf. Das Kupplungsrad 2 und der Kupplungskern 3 sind in einem Kupplungskorb 4 aufgenommen. Der Kupplungskern 3 weist weiterhin Bolzen 5 auf, die über eine Schraubenfeder 6 mit einer Kupplungsdruckplatte 7 in Kontakt stehen.

Die Kupplungsdruckplatte 7 kann aus einer Aluminiumlegierung bestehen, wobei eine Bolzenführung 8 vorgesehen ist, die einstückig mit der Kupplungsdruckplatte 7 ist. Damit ist keine separate Führungsbuchse mehr erforderlich. Das Material der Bolzen 5 kann Titan sein. Weiterhin kann anstatt der dargestellten Stufe an der Kontaktstelle des Bolzens 5 mit dem Kupplungskern 3 ein weich auslaufender Radius vorgesehen sein, um die Kerbwirkung an dieser Stelle zu vermindern.

Zwischen dem Kupplungskorb 4 und dem Kupplungsrad 2 sind Kupplungsstahlscheiben 9 und Kupplungsmitnehmerscheiben 10 angeordnet. Die Kupplungsmitnehmerscheiben 10 weisen Nasen 11 auf, die in entsprechende Öffnungen des Kupplungskorbs 4 eingreifen können.

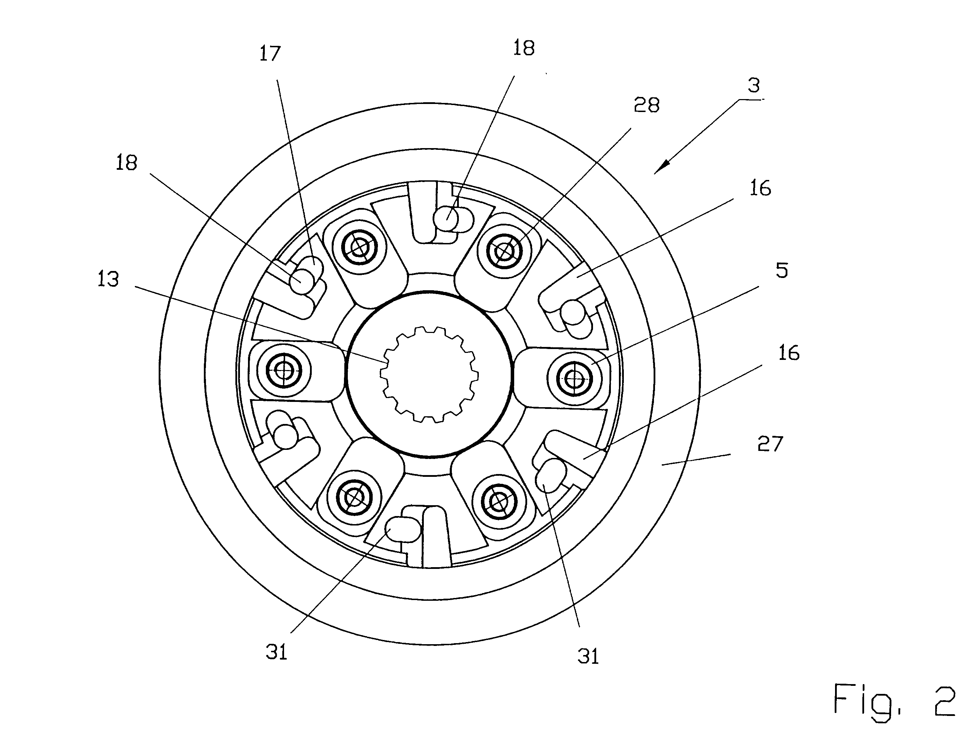

Über eine entsprechende Verzahnung 13 (siehe Fig. 2) ist der Kupplungskern 3 mit einer nicht dargestellten Getriebeeingangswelle verbunden. Der Kupplungskorb 4 ist direkt oder über ein Zwischenrad mit der Kurbelwelle des Motors verbunden, so daß eine entsprechende Kurbelwellendrehzahl auf den Kupplungskorb 4 übertragen wird. Der Kupplungskorb 4 nimmt über die Öffnungen 12 die Kupplungsmitnehmerscheiben 10 mit und versetzt diese in eine entsprechende Drehbewegung. In einem eingerückten Zustand der Kupplung, d.h. eine nicht dargestellte Druckstange und ein Nehmerzylinder werden nicht betätigt, wird über die Schraubenfeder 6 eine entsprechende Anpreßkraft zwischen den Kupplungsstahlscheiben 9 und den Kupplungsmitnehmerscheiben 10 bewirkt. Dadurch wird die Drehbewegung der Kupplungsmitnehmerscheiben 10 auf die Kupplungsstahlscheiben 9 übertragen, welche über eine Innenverzahnung 14 mit einer Außenverzahnung 15 des Kupplungsrads 2 in Kontakt stehen. Dadurch wird die Drehbewegung der Kupplungsstahlscheiben 9 auf das Kupplungsrad 2 übertragen. In einem ausgerückten Zustand der Kupplung wird über die vorgenannte Druckstange die Anpreßkraft der Schraubenfeder 6 auf Null reduziert, so daß die Kupplungsmitnehmerscheiben 10 im wesentlichen frei laufen.

Weiterhin ist eine Tellerfeder 33 vorgesehen, die das Kupplungsrad 2 gegen den Kupplungskern 3 niederhält und deren Vorspannkraft beim Auflaufen des Kupplungsrads 2 zu überwinden ist. Durch Wahl der Vorspannkraft der Tellerfeder 33 und des Auflaufwinkels läßt sich das Einkuppelverhalten maßgeblich beeinflussen.

Wird nun durch den Fahrer ein Herunterschalten gewünscht, so zieht dieser die Kupplung vollständig, so daß es zu einem im wesentlichen Freilaufen der Mitnehmerscheiben 10 kommt. Daraus folgt, daß die Kupplungsstahlscheiben 9 nicht mehr mitgenommen werden, so daß damit das Kupplungsrad 2 und dadurch der Kupplungskern 3 nicht mehr angetrieben sind. Läßt nun der Fahrer die Kupplung nach dem Schalten in einem kleineren Gang los, so wird vor einem entsprechenden Gasgeben durch den Motor ein Bremsmoment bzw. ein Rückdrehmoment ausgeübt, da der Motor auf eine höhere Drehzahl beschleunigt wird. Bei einer üblichen Kupplung mit einteiliger Kupplungseinheit kann dies zu dem oben genannten Stempeln des Hinterrads führen. Dieses Stempeln kann jedoch durch die folgenden Maßnahmen wirksam und hochgradig reproduzierbar vermieden werden.

Der Kupplungskern 3 weist hierzu zumindest drei Auflauframpen 16 auf. Diese Auflauframpen weisen jeweilse eine Auflauframpennut 17 auf. In der Auflauframpennut 17 ist eine Kugel 18 geführt, die mit einer Gegenrampennut 19 in Kontakt steht, welche in einer Gegenrampe 20 ausgebildet ist. Die Gegenrampe 20 ist gegenüberliegend zur Auflauframpe 16 an der Unterseite des Kupplungsrads 2 ausgebildet (es sei angemerkt, daß die Lagenangaben nicht der Einbaulage entsprechen). Die Auflauframpennut 17 und die Gegenrampennut 19, welche einen identischen Auflaufwinkel aufweisen können, sind hierbei derart an den Auflauframpen und den Gegenrampen 20 vorgesehen, daß bei dem Auftreten eines Rückdrehmoments bzw. eines Bremsmoments beim Herunterschalten eine Axialund Radialbewegung des Kupplungskerns 3 bewirken. Die Bewegung des Kupplungskerns 3 erfolgt durch die Rampen entlang einer Schraubenlinie. Es wird somit die Drehbewegung des Kupplungskerns 3 in eine axiale Anhebung desselben umgesetzt. Die Drehbewegung des Kupplungskerns 2 wird in dieser Ausführungsform durch die Bolzen 5 begrenzt, welche mit einer Innenfläche eines entsprechenden Langlochs 22 in dem Kupplungskern 3 in Kontakt kommen. Die resultierende Axialbewegung ist hierbei derart dimensioniert, daß sich beim Vorliegen eines Bremsmoments eine gesteuerte Verminderung der Anpreßkraft und damit der übertragbaren Reibkraft ergibt, wodurch ein drehmomentgesteuerter Kupplungsschlupf erzielt wird.

Nachdem sich das Motorbremsmoment bzw. das Motorrückdrehmoment wieder in ein Beschleunigungsmoment umgewandelt hat, dreht sich das Kupplungsrad wieder zurück und bewirkt ein Schließen der Kupplung, so daß die nötige Kraft übertragen werden kann. Hierbei kommt eine Anschlagfläche 23 der Gegenrampe 20 dann mit einer Gegenfläche 24 des Kupplungskerns in Kontakt und kann den notwendigen Kraftfluß herstellen.

Der Kupplungskorb 4 weist weiterhin einen Ring 25 auf, der die Lamellen 26 des Kupplungskorbs 4 entgegen der bei einer Rotation wirkenden Fliehkraft zusammenhält.

Der Kupplungskern 3 weist weiterhin einen Auflagering 27 auf, der mit der untersten Kupplungsstahlscheibe 9 in Kontakt steht. Weiterhin könnte auch je nach verwendeter Bauart eine Mitnehmscheibe 10 aufliegen.

Am unteren Ende der Auflauframpennut 17 ist ein Auflauframpennutabschluß 31 vorgesehen, der im Ruhezustand die Kugel 18 aufnimmt. Dasselbe gilt für einen Gegenrampennutabschluß 32, der am oberen Ende der Gegenrampennut vorgesehen ist.

In der Fig. 2 ist eine Draufsicht von oben, gemäß der Darstellung in Fig. 1, gezeigt. Hierbei sind sechs Auflauframpen 16 vorgesehen, wobei beispielhaft vier Kugeln 18 in ihrer Ausgangsstellung dargestellt sind. Die Auflauframpennuten 17 weisen dort, wo die Kugeln 18 zu liegen kommen, ihren niedrigsten Punkt in der Zeichenebene auf.

Weiterhin sind sechs Bolzen 5 dargestellt, welche ein Innengewinde 28 aufweisen. In dieses Innengewinde können Schrauben 29 eingesetzt werden, um einen Federteller 30 für die Schraubenfeder 6 festzulegen (siehe Fig. 1).

Bei einem auftretenden Rückdrehmoment bzw. Bremsmoment würde sich das Kupplungsrad 2 somit im Uhrzeigersinn gegenüber dem feststehenden Kupplungskern 3 verdrehen, wodurch das Kupplungsrad 2 an den Auflauframpen 16, über die Kugeln 18 und die Gegenrampen 20 aufläuft und sich dadurch gegenüber dem Kupplungskern 3 nach oben schiebt, unter Ausführung einer Drehbewegung. Hierbei können sich die Kugeln 18 in der Auflauframpennut 17 bewegen bzw. abrollen, so daß lediglich eine Rollreibung auftritt.

In der Fig. 1 ist ein Zustand der Kupplung dargestellt, bei der gerade ein Rückdrehmoment auftritt und sich das Kupplungsrad 2 schon etwas nach oben gedreht hat, so daß es zu einem gesteuerten Kupplungsschlupf kommen kann. Die Kugel 18 hat sich, wie in der Fig. 1 dargestellt, schon etwas nach oben an der Auflauframpe 16 verschoben bzw. ist an derselben abgerollt. In umgekehrter Weise gilt das für die Gegenrampe 20, wobei sich die Kugel 18 an der Gegenrampe 20 dementsprechend etwas nach unten bewegt hat.

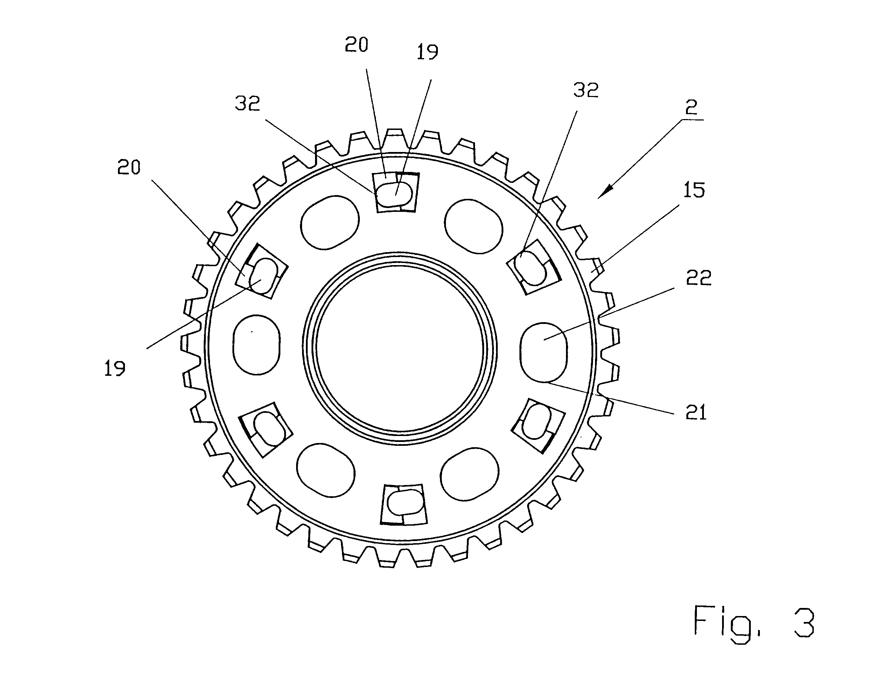

In der Fig. 3 ist das Kupplungsrad 2 in einer Ansicht von unten dargestellt (bezogen auf die Darstellung in der Fig. 1). Das Kupplungsrad 2 weist an seinem Außenumfang die Aussenverzahnung 15 auf. Weiterhin sind sechs Gegenrampen 20 dargestellt, die jeweils eine Gegenrampennut 19 aufweisen. Zwischen den Gegenrampen 20 sind Langlöcher 22 angeordnet, die bei einer Drehung des Kupplungsrads 2 nach oben über die Innenfläche 21 mit den Bolzen 5 in Kontakt treten. Die Innenfläche 21 beschränkt damit die Drehbewegung des Kupplungsrads 2 und somit den Schlupf. Natürlich kann die Kupplung derart ausgelegt werden, sofern zweckmäßig, daß beim Abschluß der Drehbewegung des Kupplungsrads 2 (durch Inkontaktkommen mit der Innenfläche 21 des Langlochs 22) ein Freilauf der Kupplung auftritt.

In der Darstellung gemäß Fig. 3 ist der Auflaufwinkel der Gegenrampe 20 derart gewählt, daß beispielsweise bei einer Betrachtung der oberen Gegenrampe 20 links der tiefste Punkt der Gegenrampennut 19 und rechts der höchste Punkt ist (in der Zeichenebene).

Weiterhin sei angemerkt, daß das Kupplungsrad 2 einstückig ausgebildet ist, dasselbe gilt für den Kupplungskern 3, wobei jedoch der Bolzen 5 separat mit dem Kupplungskern 3 verschraubt ist und weiterhin der Auflagering 27 ebenso mit demselben verschraubt werden kann.

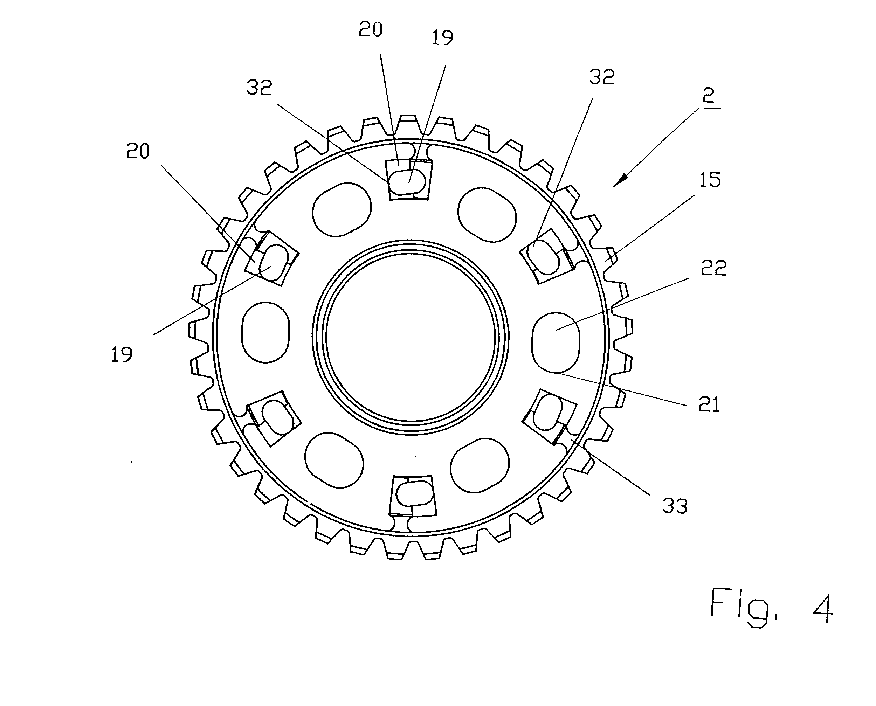

Die Fig. 4 zeigt eine weitere Ausführungsform des Kupplungsrads 2. Zwischen dem inneren Rand der Außenverzahnung 15 und den Gegenrampen 20 ist eine Verstärkungsrippe 33 vorgesehen. Die Verstärkungsrippe 33 ermöglicht einen besseren Kraftfluß von der Gegenrampe 20 in das Kupplungsrad 2 und vermindert zudem die Kerbwirkung.

## Patentansprüche

1. Kupplungseinheit für eine für Fahrzeuge verwendete Reibungskupplung mit einem Kupplungsrad (2) und einem Kupplungskern (3), wobei das Kupplungsrad (2) relativ zum Kupplungskern (3) bewegbar ist und dadurch eine Verminderung der Reibkraft der Kupplung bewirkt, der Kupplungskern (3) zumindest drei Auflauframpen (16) aufweist und das Kupplungsrad (2) eine zur Anzahl der Auflauframpen (16) identische Anzahl von Gegenrampen (20) aufweist,
dadurch gekennzeichnet, daß
die Auflauframpen (16) jeweils eine Auflauframpennut (17) und die Gegenrampen (20) jeweils eine Gegenrampennut (19) aufweisen, wobei in den Auflauframpennuten (17) jeweils eine Kugel (18) geführt ist, die mit der jeweiligen Gegenrampennut (19) in Kontakt steht, und zumindest eine Gegenrampe (20) eine Anschlagfläche (23) aufweist, die bei Vorliegen eines Beschleunigungsmoments des Kupplungskerns (3) mit einer Gegenfläche (24) des Kupplungskerns (3) in Kontakt kommt.

2. Kupplungseinheit nach Anspruch 1,
dadurch gekennzeichnet, daß
die Auflauframpen (16) und die Gegenrampen (20) jeweils einen vorbestimmten Auflaufwinkel aufweisen, wobei unter anderem über den Auflaufwinkel ein Drehmoment festgelegt werden kann, ab dem die Reibkraft der Kupplung vermindert wird und ab dem dadurch ein drehmomentgesteuerter Kupplungsschlupf entsteht.

3. Kupplungseinheit nach Anspruch 1 oder 2,
dadurch gekennzeichnet, daß
der Auflaufwinkel relativ zur Drehrichtung eines Kupplungskorbs (4) derart geneigt und angeordnet ist, daß beim Auftreten eines Bremsmoments des Kupplungskerns (3) das Kupplungsrad (2) vom Kupplungskern (3) axial wegbewegt wird und dadurch die Anpreßkraft der Kupplung vermindert wird.

4. Kupplungseinheit nach Anspruch 1 bis 3,
dadurch gekennzeichnet, daß
die Bewegung des Kupplungsrads (2) weg von dem Kupplungskern (3) bei einem Bremsmoment des Kupplungskerns (3) durch Bolzen (5) beschränkt ist, die mit Innenflächen (21) von Langlöchern (22) des Kupplungsrads (2) in Kontakt kommen.

5. Kupplungseinheit nach Anspruch 1 bis 4,
dadurch gekennzeichnet, daß
das Kupplungsrad (2) und der Kupplungskern (3) aus einer Aluminiumlegierung gefertigt sind und die Kugel (18) aus Stahl besteht.

6. Kupplungseinheit nach Anspruch 5,
dadurch gekennzeichnet, daß
das Kupplungsrad (2) und der Kupplungskern (3) aus galvanisch behandeltem Ergal gefertigt sind.

7. Reibungskupplung für Fahrzeuge, die eine Kupplungseinheit gemäß den Ansprüchen 1 bis 6 verwendet.

8. Verwendung der Reibungskupplung nach Anspruch 7 für Motorräder.

## Claims

1. A clutch unit for a friction clutch used for vehicles, having a clutch wheel (2) and a clutch core (3), wherein the clutch wheel (2) can move in relation to the clutch core (3) and as a result effects a reduction in the frictional force of the clutch, the clutch core (3) has at least three overrun inclines (16) and the clutch wheel (2) has a number of counter-inclines (20) that is identical to the number of overrun inclines (16),
**characterised in that** the overrun inclines (16) each have an overrun incline groove (17) and the counter-inclines (20) each have a counter-incline groove (19), wherein a ball (18), which is in contact with the respective counter-incline groove (19), is guided in each of the overrun incline grooves (17), and at least one counter-incline (20) has a stop face (23), which comes into contact with a counter face (24) of the clutch core (3) upon the presence of an accelerating moment of the clutch core (3).

2. A clutch unit according to claim 1,
**characterised in that** the overrun inclines (16) and the counter-inclines (20) each have a predetermined overrun angle, wherein inter alia a torque can be fixed via the overrun angle from which the frictional force of the clutch is reduced and from which a torque-controlled clutch slip is thereby produced.

3. A clutch unit according to Claim 1 or 2,
**characterised in that** the overrun angle is inclined and disposed in such a manner in relation to the direction of rotation of a clutch basket (4) that upon the occurrence of a braking moment of the clutch core (3) the clutch wheel (2) is moved axially away from the clutch core (3) and as a result the application force of the clutch is reduced.

4. A clutch unit according to Claim 1 to 3,
**characterised in that** the movement of the clutch wheel (2) away from the clutch core (3) during a braking moment of the clutch core (3) is limited by pins (5) which come into contact with inner faces (21) of slots (22) of the clutch wheel (2).

5. A clutch unit according to Claim 1 to 4,
**characterised in that** the clutch wheel (2) and the clutch core (3) are produced from an aluminium alloy and the ball (18) is made from steel.

6. A clutch unit according to Claim 5,
**characterised in that** the clutch wheel (2) and the clutch core (3) are produced from electroplated ergal.

7. A friction clutch for vehicles which uses a clutch unit as specified by Claims 1 to 6.

8. Use of the friction clutch according to Claim 7 for motorcycles.

## Revendications

1. Unité d'embrayage pour un embrayage à friction destiné à des véhicules, comprenant une roue-volant d'embrayage (2) et un moyeu d'embrayage (3), le volant (2) étant mobile relativement au moyeu d'embrayage (3), ce qui se traduit par une diminution de l'effort de friction d'embrayage, le moyeu d'embrayage (3) présentant au moins trois butées d'accostage (16) et le volant (2) présentant un nombre de contre-butées (20) identique au nombre des butées d'accostage (16), caractérisé en ce les butées d'accostage (16) présentent chacune une gorge de butée d'accostage (17) et les contre-butées (20) une gorge de contre-butée (19), une bille (18) étant guidée dans chacune des gorges de butées d'accostage (17) et en contact avec la gorge de contre-butée (19) correspondante, et au moins une contre-butée (20) présentant une face de butée (23) qui vient en contact d'une face complémentaire (24) du moyeu d'embrayage (3) à l'application d'un moment d'accélération du moyeu d'embrayage (3).

2. Unité d'embrayage selon la revendication 1, caractérisée en ce que les butées d'accostage (16) et les contre-butées (20) présentent chacune un angle d'accostage prédéterminé, l'angle d'accostage permettant entre autres de fixer un moment de rotation à partir duquel l'effort de friction de l'embrayage s'amenuise et à partir duquel il se produit un patinage d'embrayage à couple de rotation contrôlé.

3. Unité d'embrayage selon la revendication 1 ou 2, caractérisée en ce que l'angle d'accostage est incliné et agencé de telle façon par rapport au sens de rotation d'une cloche d'embrayage (4), qu'à l'apparition d'un moment de freinage du moyeu d'embrayage (3) la roue d'embrayage (2) est écartée axialement du moyeu d'embrayage (3) et de ce fait l'effort de pression de contact de l'embrayage est réduit.

4. Unité d'embrayage selon les revendications 1 à 3, caractérisée en ce que l'écartement de la roue d'embrayage (2) du moyeu d'embrayage (3) lors d'un moment de freinage du moyeu d'embrayage (3) est limité par des goujons (5) qui viennent en contact avec des faces internes (21) de boutonnières (22) du volant d'embrayage (2).

5. Unité d'embrayage selon les revendications 1 à 4, caractérisée en ce que le volant (2) et le moyeu d'embrayage (3) sont fabriqués en alliage d'aluminium et en ce que la bille (18) est en acier.

6. Unité d'embrayage selon la revendication 5, caractérisée en ce que le volant (2) et le moyeu d'embrayage (3) sont fabriqués en Ergal ayant subi un traitement galvanique.

7. Embrayage à friction pour véhicules automobiles, dans lequel est utilisée une unité d'embrayage selon les revendications 1 à 6.

8. Application de l'embrayage à friction selon la revendication 7 à des motocyclettes.
